# EUROPEAN PATENT APPLICATION

(11) **EP 3 932 737 A1**
(43) Date of publication of application: **05.01.2022**
(21) Application number: 21182603.7
(22) Date of filing: 29.06.2021
(51) Int. Cl.: B60P 3/00, B60S 5/06, B60L 53/80, B66F 9/075, B60K 1/04

(54) **SELF-PROPELLED ELECTRIC VEHICLE FOR HANDLING GLASS-SHEET SUPPORTING RACKS AND CORRESPONDING CHARGING STATION**

(30) Priority: 29.06.2020 IT 202000015646
(71) Applicant: ITALCARRELLI S.p.A., 36072 Chiampo (VI) (IT)
(72) Inventor: NEGRIN, Alessandro, 36072 CHIAMPO (VI) (IT)
(74) Representative: Bellemo, Matteo

(57) **Abstract**

A self-propelled electric vehicle (1) for handling glass-sheet supporting racks of the type comprising a front rack-supporting section (2) and a rear tractor section (3), both provided with ground-resting wheels and firmly connected to one another by mechanical means allowing the rack-supporting section (2) to move vertically with respect to the tractor section (3); the front rack-supporting section (2) being provided with an oblong substantially U-shaped chassis (6), which is provided with two longitudinal beams (7) extending horizontal and parallel to the vehicle longitudinal axis (L) to delimit a large central compartment (8) open at the front and dimensioned to accommodate a glass-sheet supporting rack, and with at least a first pair of ground-resting wheels (4) located along the longitudinal beams (7); the rear tractor section (3) being provided with at least a second pair of ground-resting wheels (5), with an electric engine assembly (12) adapted to drive into rotation at least one of the ground-resting wheels (5) of the same tractor section (3), and with a removable battery pack (20) adapted to power said electric engine assembly (12).

## Description

### CROSS-REFERENCE TO RELATED APPLICATIONS

This patent application claims priority from Italian patent application no. 102020000015646 filed on 29/06/2020.

### TECHNICAL FIELD

The present invention relates to a self-propelled electric vehicle for handling glass-sheet supporting racks and to the corresponding charging station.

More in detail, the present invention relates to an electrically-operated transporter for handling glass-sheet supporting racks of large dimensions and to the charging station thereof, to which the following disclosure will make explicit reference without thereby losing generality.

### BACKGROUND ART

As is known, transporters for handling glass-sheet supporting racks are self-propelled vehicles of large dimensions which are capable of forking, lifting, horizontally moving and finally resting again on the ground a glass-sheet supporting rack of large dimensions, with the glass-sheet(s) resting thereon.

This type of self-propelled vehicles is elongated in shape and is longitudinally divided into a large front rack-supporting section and into a rear tractor section, firmly connected to one another and both provided with ground-resting wheels.

The front rack-supporting section is adapted to fork the glass-sheet supporting rack, and is provided with an oblong and U-shaped chassis, which extends horizontally so as to delimit, astride of the vehicle midplane, an oblong and rectilinear, large central slot or compartment that extends parallel to the vehicle longitudinal axis, is open at the front, and is finally dimensioned to accommodate a glass-sheet supporting rack therein.

The front rack-supporting section is moreover provided with a pair of idle and non-steering, ground-resting wheels which are located at the front end of the oblong chassis, on opposite sides of the central slot or compartment, whereas the rear part of the rack-supporting section is firmly fixed to the tractor section by means of a connection member that keeps the front rack-supporting section and the rear tractor section always aligned to one another, astride of the vehicle midplane, and simultaneously allows the rack-supporting section to move vertically with respect to the rear tractor section.

The rear tractor section, on the other hand, is provided with a pair of driving and steering, ground-resting wheels, with an engine assembly adapted to drive into rotation the two driving and steering wheels, and with a driver's cab which is adapted to accommodate the driver of the vehicle and which has inside itself the steering wheel and the other control members necessary for driving the vehicle.

Additionally, the self-propelled vehicles described above are provided with a hydraulically-operated lifting system which is capable of varying on command the height from the ground of the front rack-supporting section.

In the most recent self-propelled vehicles, the engine assembly consists of a high-power electric engine which is mechanically coupled to the driving and steering wheels of the tractor section.

Since the self-propelled vehicles for handling glass-sheet supporting racks weigh several tons, the electric engine absorbs a lot of electric energy, therefore the rear tractor section is provided with a high-capacity battery pack that usually weighs several hundreds of kilos and is charged at a specific charging station.

Unfortunately, the weight and dimensions of the battery packs currently installed in this type of self-propelled vehicles make the removal of the battery pack from the vehicle extremely problematic and laborious, therefore the battery pack is unmovable and the charging thereof occurs by connecting the battery pack directly to the charging station with specific electric cables of large dimensions.

Obviously, during the charging, the self-propelled vehicle remains stationary at the charging station, with the operating limits that this entails. The charging of a battery pack, in fact, requires several hours.

### DISCLOSURE OF INVENTION

Aim of the present invention is to realize a self-propelled electric vehicle for handling glass-sheet supporting racks and a charging station, which are capable of drastically reducing the machine downtime when it is necessary to charge the battery pack of the vehicle.

In compliance with these aims, according to the present invention there is provided a self-propelled vehicle for handling glass-sheet supporting racks of the type comprising a front rack-supporting section and a rear tractor section, both provided with ground-resting wheels and firmly connected to one another by mechanical means allowing the rack-supporting section to move vertically with respect to the tractor section;
the front rack-supporting section being provided with an oblong substantially U-shaped chassis, which is provided with two longitudinal beams extending horizontal and parallel to the vehicle longitudinal axis to delimit a large central compartment open at the front and dimensioned to accommodate a glass-sheet supporting rack, and with at least a first pair of ground-resting wheels located along the longitudinal beams;
the rear tractor section being provided with at least a second pair of ground-resting wheels, and with an electric engine assembly adapted to drive into rotation at least one of the ground-resting wheels of the same tractor section;
the self-propelled vehicle being additionally provided with a battery pack adapted to power said electric engine assembly, and being **characterised in that** said battery pack is removable, and is fitted in axially sliding manner into a corresponding battery compartment of the vehicle, so as to be fitted in and extracted from said battery compartment by a straight movement in a first direction substantially parallel to a main axis of said battery pack.

Preferably, though not necessarily, the self-propelled vehicle is moreover characterised in that the battery compartment is provided with one or more rectilinear rails which extend parallel to said first direction, and are adapted to be coupled in sliding manner with corresponding rectilinear guides located on the battery pack.

Preferably, though not necessarily, the self-propelled vehicle is moreover characterised in that the battery compartment is provided with two or more rectilinear rails substantially coplanar to one another, which are adapted to be coupled in sliding manner with corresponding rectilinear guides located on the bottom of said battery pack.

Preferably, though not necessarily, the self-propelled vehicle is moreover characterised in that the battery compartment additionally comprises a series of idle guide rollers spaced along the/each rectilinear rail.

Preferably, though not necessarily, the self-propelled vehicle is moreover characterised in that the battery compartment additionally comprises a floating electrical connection, which is adapted to connect the electrical circuit of the vehicle to the battery pack, and comprises: an elastically deformable rod having the rear end fixed to the chassis of the self-propelled vehicle, and extending cantilevered towards the access opening of the battery compartment while remaining locally substantially parallel to said first direction; and a first male-female electrical connector, that is firmly fixed on the front end of said elastically deformable rod and is adapted to engage in removable manner with a second male-female electrical connector, which is placed on said battery pack and is complementary to said first male-female electrical connector.

Preferably, though not necessarily, the self-propelled vehicle is moreover characterised in that said elastically deformable rod is located beside the/a rectilinear rail of the battery compartment.

Preferably, though not necessarily, the self-propelled vehicle is moreover characterised in that said elastically deformable rod is a coil spring.

Preferably, though not necessarily, the self-propelled vehicle is moreover characterised in that said first male-female electrical connector is connected to the electrical circuit of the self-propelled vehicle by means of a plurality of electric cables extending inside said coil spring.

Preferably, though not necessarily, the self-propelled vehicle is moreover characterised in that said floating electrical connection additionally comprises a protruding beak, which is firmly fixed on the front end of said elastically deformable rod so as to protrude cantilevered beyond said first male-female electrical connector, while remaining substantially parallel to said first direction, and is adapted to cooperate with a centring member placed on the battery pack in order to align said first male-female electrical connector with said second male-female electrical connector.

Preferably, though not necessarily, the self-propelled vehicle is moreover characterised in that said first direction is substantially horizontal.

Preferably, though not necessarily, the self-propelled vehicle is moreover characterised in that it additionally comprises a lifting apparatus, which is adapted to adjust/ change on command the height of the front rack-supporting section with respect to the ground, keeping the two longitudinal beams of the oblong chassis parallel to one another and to the ground.

Preferably, though not necessarily, the self-propelled vehicle is moreover characterised in that the battery compartment is placed on the rear tractor section.

Preferably, though not necessarily, the self-propelled vehicle is moreover characterised in that the access opening of the battery compartment is located on the side of the self-propelled vehicle, at a given height from the ground.

According to the present invention, there is also provided a charging station for self-propelled vehicles for handling glass-sheet supporting racks, which vehicles are provided with a battery pack housed in axially sliding manner into a battery compartment of the vehicle, so as to be inserted in and extracted from said battery compartment via a straight movement in a first direction substantially parallel to the main axis of the battery pack;
the charging station being characterised by comprising: a battery-holding storage provided with a number of battery housings that are adapted to be engaged in axially sliding manner each by a single battery pack in a second direction substantially parallel to the main axis of the battery pack, and can be selectively and alternately arranged in front of a battery inlet and outlet opening through which it is possible to insert and extract a battery pack from the battery housing; and a battery loading and unloading assembly which is adapted to move, forwards and backwards along said second direction, the battery pack that is momentarily aligned with the battery inlet and outlet opening of the battery-holding storage, so as to insert or extract the battery pack from the battery housing that is at the moment aligned with said battery inlet and outlet opening.

Preferably, though not necessarily, the charging station is moreover characterised in that said battery loading and unloading assembly is adapted to selectively protrude cantilevered from the battery-holding storage through the battery inlet and outlet opening and to grasp and hold the battery pack that is placed outside of the battery-holding storage, in front of the battery inlet and outlet opening.

Preferably, though not necessarily, la charging station is moreover characterised in that said battery loading and unloading assembly comprises a mobile push-pull member, which can hold a battery pack, and is movable in said second direction along a substantially rectilinear path that crosses the battery housing aligned with the battery inlet and outlet opening of the battery-holding storage, passes through the battery inlet and outlet opening of the battery-holding storage, and ends outside of the battery-holding storage

Preferably, though not necessarily, the charging station is moreover characterised in that each battery housing of the battery-holding storage is provided with one or more rectilinear rails that extend parallel to said second direction, and are adapted to couple in sliding manner with corresponding rectilinear guides located on the battery pack.

Preferably, though not necessarily, the charging station is moreover characterised in that each battery housing of the battery-holding storage is provided with two or more rectilinear rails substantially coplanar to one another, that are adapted to couple in sliding manner with corresponding rectilinear guides located on the bottom of said battery pack.

Preferably, though not necessarily, the charging station is moreover characterised in that each battery housing of the battery-holding storage additionally comprises a series of idle guide rollers spaced along the/ each rectilinear rail.

Preferably, though not necessarily, the charging station is moreover characterised in that each battery housing of the battery-holding storage additionally comprises a floating electrical connection, which is adapted to connect the battery pack to a battery charging apparatus, and which comprises: an elastically deformable rod having the rear end fixed to the frame of the battery-holding storage, and extending cantilevered towards the battery inlet and outlet opening of the battery-holding storage while remaining locally substantially parallel to said second direction; and a fist male-female electrical connector, which is firmly fixed to the front end of said elastically deformable rod and is adapted to engage in removable manner with a second male-female electrical connector, which is located on said battery pack and is complementary to said first male-female electrical connector.

Preferably, though not necessarily, the charging station is moreover characterised in that said elastically deformable rod is located beside the/a rectilinear rail of the battery housing.

Preferably, though not necessarily, the charging station is moreover characterised in that said elastically deformable rod is a coil spring.

Preferably, though not necessarily, the charging station is moreover characterised in that said first male-female electrical connector is connected to said battery charging apparatus, by means of a plurality of electric cables extending inside said coil spring.

Preferably, though not necessarily, the charging station is moreover characterised in that said floating electrical connection additionally comprises a protruding beak, which is firmly fixed on the front end of said elastically deformable rod so as to protrude cantilevered beyond said first male-female electrical connector, while remaining substantially parallel to said second direction, and is adapted to cooperate with a centring member placed on the battery pack in order to align said first male-female electrical connector with said second male-female electrical connector.

Preferably, though not necessarily, the charging station is moreover characterised in that said second direction is substantially horizontal.

Preferably, though not necessarily, the charging station is moreover characterised in that the battery inlet and outlet opening of said battery-holding storage is substantially at the same height from the ground of the battery compartment of the self-propelled vehicle.

### BRIEF DESCRIPTION OF THE DRAWINGS

The present invention will now be described with reference to the accompanying drawings, which illustrate a non-limiting example embodiment thereof, wherein:
- Figure 1 is a perspective view of a self-propelled electric vehicle for handling glass-sheet supporting racks and of the charging station thereof, both realized according to the teachings of the present invention;
- Figures 2 and 3 are two perspective views of the charging station shown in Figure 1, with parts removed for clarity's sake;
- Figure 4 is a perspective view of the rear part of the self-propelled vehicle shown in Figure 1, with parts removed for clarity's sake;
- Figure 5 is a bottom perspective view of the battery pack housed in the battery compartment of the self-propelled vehicle shown in Figure 1, with parts removed for clarity's sake;
- Figure 6 is a perspective view of the electrical connection between the battery pack housed in the battery compartment of the self-propelled vehicle shown in Figure 1 and the electrical circuit of the same vehicle, with parts removed for clarity's sake; whereas
- Figures from 7 to 10 schematically show some steps of the battery-change procedure carried out by the charging station shown in Figures from 1 to 3, with parts removed for clarity's sake.

### BEST MODE FOR CARRYING OUT THE INVENTION

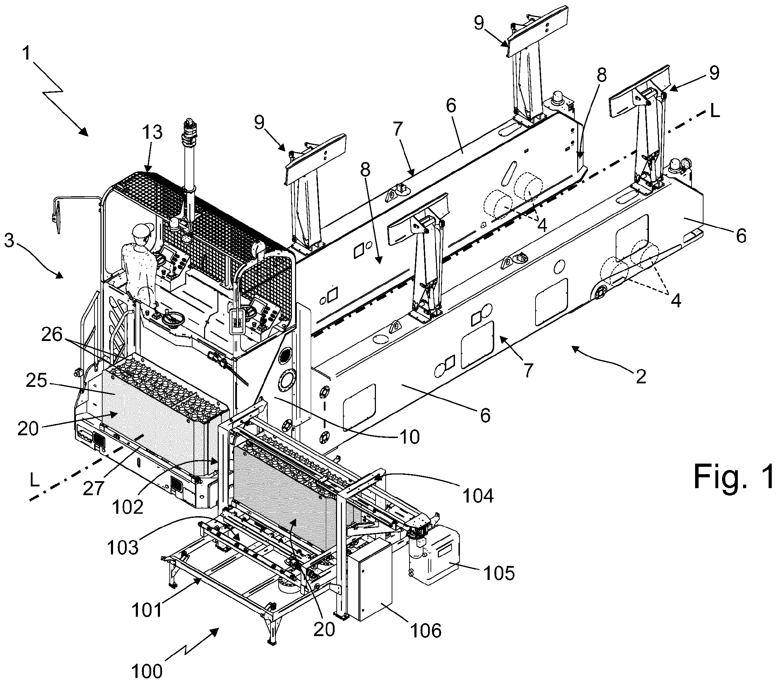

With reference to Figures 1, 2, 3 and 4, reference numbers 1 and 100 respectively denote, as a whole, an electrically-operated self-propelled vehicle for handling glass-sheet supporting racks and the charging station thereof.

More in detail, the self-propelled vehicle 1 is structured so as to move, inside a general warehouse, storage, plant or other work area, single glass-sheet supporting racks preferably of large dimensions (not shown), i.e. large rigid frameworks specifically structured to support glass-sheets or packs of glass-sheets of large dimensions, in a more or less vertical position.

In other words, the self-propelled vehicle 1 is structured so as to be able to fork, lift, horizontally move and finally rest again on the ground a generic glass-sheet supporting rack with the possible load thereof of glass-sheets or packs of glass-sheets.

Since such equipment is known and easy to find in any plant for the production of glass-sheets, the glass-sheet supporting racks won't be further described.

Clearly, the self-propelled vehicle 1 can also be advantageously used for handling in safety loading platforms adapted to support metal plates and other industrial items of large dimensions.

The self-propelled vehicle 1 is provided with a series of driving and/or steering ground-resting wheels, with an electric-type engine assembly adapted to drive into rotation at least one of the ground-resting wheels, and with a removable and chargeable battery pack which is electrically connected to the electrical circuit of the vehicle so as to supply electric energy to the engine assembly, and is accommodated in easily removable manner inside a specific battery compartment arranged aboard the vehicle.

The charging station 100, on the other hand, is capable of replacing, on command and preferably in a completely automatic manner, the discharged battery pack momentarily present in the battery compartment of the self-propelled vehicle 1 with a new charged battery pack, and then of separately and autonomously charge the discharged battery pack removed from the self-propelled vehicle 1.

With reference to Figure 1, in particular, the self-propelled vehicle 1 is oblong in shape and is longitudinally divided into a front rack-supporting section 2 and a rear tractor section 3, both provided with ground-resting wheels, which are aligned one after the other along the vehicle longitudinal axis L and are firmly connected to one another.

More in detail, the front rack-supporting section 2 and the rear tractor section 3 are permanently connected to one another by means of a mechanical assembly (not shown in the figures), which is structured so as to keep the rack-supporting section 2 and the tractor section 3 always aligned to one another, astride of the vertical midplane of the vehicle, and simultaneously allows the rack-supporting section 2 to freely move with respect to the tractor section 3 in substantially vertical direction, i.e. orthogonal to the vehicle longitudinal axis L.

Moreover, the self-propelled vehicle 1 is provided with a preferably hydraulically- or pneumatically- operated lifting apparatus (not shown in the figures) which is capable of varying/adjusting on command the height of the rack-supporting section 2 with respect to the ground, preferably while always keeping the rack-supporting section 2 parallel to itself and to the ground.

The front rack-supporting section 2 is adapted to fork a glass-sheet supporting rack in a manner known per se, and is provided with at least a pair of preferably idle and non-steering ground-resting wheels 4, which are arranged close to the front end of the self-propelled vehicle 1, on opposite sides of the vertical midplane of the vehicle, preferably in substantially specular position with respect to the same midplane.

The rear tractor section 3, on the other hand, is adapted to move/drive horizontally the rack-supporting section 2, and is provided with at least a pair of preferably driving and steering, ground-resting wheels 5 that are arranged close to the rear end of the self-propelled vehicle 1, on opposite sides of the vertical midplane of the vehicle, preferably in substantially specular position with respect to the same midplane.

Thus the self-propelled vehicle 1 is preferably provided with at least two front ground-resting wheels 4 and of at least two rear ground-resting wheels 5, which are located in pairs on opposite sides of the vertical midplane of the vehicle, substantially at the vertexes of a rectangle or of an isosceles trapezium. The rear ground-resting wheels 5, additionally, are driving and steering, whereas the front ground-resting wheels 4 are idle and non-steering.

With reference to Figure 1, in particular the rack-supporting section 2 preferably comprises: a substantially U-shaped and preferably made of metal material, large and rigid oblong chassis 6 which is provided with two long tines or longitudinal beams 7 that extend substantially parallel to the ground, i.e. horizontally, and to the vehicle longitudinal axis L, in a substantially specular position on opposite sides of the vertical midplane of the vehicle; and two pairs of idle and non-steering ground-resting wheels 4, which are fixed to the front/distal ends of the two longitudinal beams 7, with the capability of rotating about respective rotation axes substantially perpendicular to the vertical midplane of the vehicle.

The two longitudinal beams 7 form/delimit, in between themselves, an oblong and rectilinear large central slot or compartment 8 that extends parallel to the vehicle longitudinal axis L, substantially astride of the vertical midplane of the vehicle, is open at the front, and is finally dimensioned so as to accommodate, or rather to fork, a glass-sheet supporting rack.

The lifting apparatus of the self-propelled vehicle 1 is adapted to vary on command the height from the ground of the oblong chassis 6 preferably while keeping the two longitudinal beams 7 always parallel to one another and to the ground.

Clearly, in a different embodiment, the front/distal end of each longitudinal beam 7 could be provided with a single idle and non-steering ground-resting wheel 4.

Preferably, the rear part of the oblong chassis 6 is furthermore firmly connected to the tractor section 3 by means of swinging-arms linkage (not shown in the figures) that allows the rack-supporting section 2 to freely move with respect to the tractor section 3 in vertical direction, while always remaining astride of the vertical midplane of the vehicle.

With reference to Figure 1, preferably the rack-supporting section 2 is moreover superiorly provided with at least a pair of movable load-locking arms 9, which are mounted cantilevered on the longitudinal beams 7 of the oblong chassis 6, on opposite sides of the vehicle midplane, and are capable of moving on command, each with respect to the corresponding longitudinal beam 7, from and towards the vertical midplane of the vehicle, so as to bring their distal end in abutment against the load of the glass-sheet supporting rack momentarily accommodated into the central slot or compartment 8.

More specifically, the two movable load-locking arms 9 are preferably arranged in substantially specular position on opposite sides of the vehicle midplane.

In addition, each movable load-locking arm 9 preferably extends cantilevered upwards from the upper part of the corresponding longitudinal beam 7, and it is preferably pivotally joined to the same longitudinal beam 7 so as to be able to swing from and towards the vertical midplane of the vehicle, rotating about a reference axis substantially parallel to the vehicle longitudinal axis L.

In the example shown, in particular, the rack-supporting section 2 is preferably provided with two pairs of movable load-locking arms 9, suitably spaced along the entire length of the two longitudinal beams 7 of the oblong chassis 6.

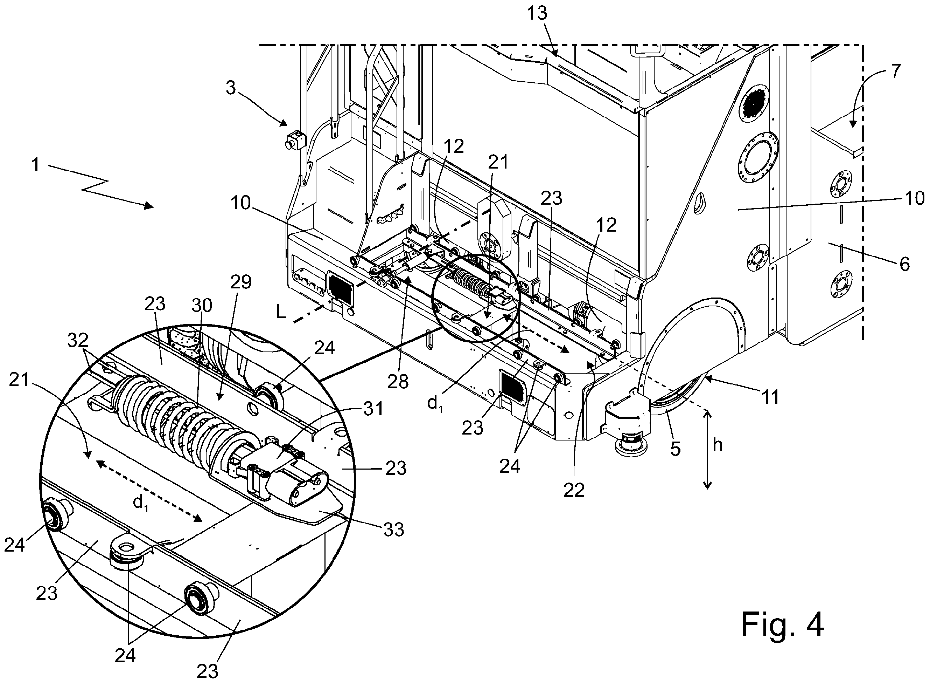

With reference to Figures 1 and 4, the rear tractor section 3, on the other hand, preferably comprises: a small rigid chassis 10 preferably made of metallic material; a pair of driving and steering, ground-resting wheels 5 that are fixed to the chassis 10 in substantially specular position on opposite sides of the vertical midplane of the vehicle, with the capability of rotating about the respective substantially vertical steering axes; a preferably electrically- or hydraulically- operated, steering assembly (not shown in the figures) that controls the orientation/ angle of the wheels 5 with respect to the chassis 10 and to the vehicle longitudinal axis L; and an electric engine assembly, which is placed on the chassis 10 and is adapted to drive into rotation the rear wheels 5.

More in detail, the two ground-resting wheels 5 are preferably placed on a pair of swivelling wheel hubs 11 that are arranged in a substantially specular position on opposite sides of the vehicle midplane, and are fixed to the chassis 10 with the capability of rotating about respective substantially vertical rotation axes. The steering assembly, in turn, preferably comprises two electric servomotors that are mechanically connected each to a respective wheel hub 11, and are capable of rotating on command the same wheel hub 11 about the vertical rotation axis thereof, so as to be able to vary/control the angular position of the wheel hub 11 with respect to the vehicle longitudinal axis L.

Instead, the engine assembly preferably comprises two electric engines 12 separate and independent to one another, that are mechanically connected each to a respective ground-resting wheel 5, so as to drive into rotation only such wheel 5.

Preferably, the rear tractor section 3 of the vehicle is moreover also provided with a driver's cab 13 which is dimensioned to accommodate the driver of the vehicle (i.e. the person driving the self-propelled vehicle 1), and is preferably realized on the top of the chassis 10. Inside itself the driver's cab 13 preferably accommodates the steering wheel, the power lever that controls the rotation speed of the rear wheels 5, and the other manually operated control members necessary for driving the self-propelled vehicle 1.

With reference to Figures 1, 4, 5 and 6, the self-propelled vehicle 1 is moreover provided with a removable and chargeable battery pack 20 which is oblong in shape, and is inserted in easily removable manner inside a battery compartment 21, preferably having a shape substantially complementary to that of the battery pack 20, which is located/realized on the rear tractor section 3, or rather on the chassis 10 of the tractor section 3, and is provided with an access opening 22 through which it is possible to insert and extract the battery pack 20.

More in detail, the removable battery pack 20 is coupled /couplable to the battery compartment 21 in axially slidable manner, so as to be inserted in and extracted from the battery compartment 21 moving straightaway the battery pack 20 in an extraction/insertion direction d₁, which is substantially parallel to a main axis A of the battery pack 20 and is preferably additionally substantially horizontal.

In the example shown, in particular, the main axis A of battery pack 20 preferably coincides with the longitudinal axis of the battery pack 20.

In the shown example, moreover, the battery compartment 21 is preferably an uncovered compartment. The access opening 22 of battery compartment 21, additionally, is preferably located on the lateral side of the self-propelled vehicle 1, or rather of the rear tractor section 3, at a given height h from the ground and preferably, though not necessarily, ranging between 30 and 90 cm (centimetres).

With reference to Figures 4, 5 and 6, the battery compartment 21 in particular comprises: at least a pair of rectilinear rails 23 that extend parallel to the insertion/ extraction direction d₁ of the battery pack 20, and are rigidly fixed to the chassis of the self-propelled vehicle 1, or rather to the chassis 10 of the rear tractor section 3, one spaced beside the other, preferably so as to lie on a same, substantially horizontal, reference plane; and preferably a series of small guide rollers 24 that are spaced along the entire length of the single rails 23, and are fixed in freely rotatable manner on the same rails 23.

The/each battery pack 20, in turn, is preferably substantially oblong parallelepiped in shape, and comprises: a preferably substantially parallelepiped-shaped, rigid outer box-like case 25 that accommodates inside itself a series of electrochemical batteries/cells 26 of known type, connected in series and/or in parallel; and at least a pair of rectilinear guides 27 parallel to the main axis A of the battery pack 20, which are shaped so as to couple in axially sliding manner each to a respective rail 23 of the battery compartment 21, and are rigidly fixed to the bottom of the box-like case 25 one spaced beside the other, so as to engage in sliding manner with corresponding rectilinear rails 23 of the battery compartment 21.

More in detail, the rectilinear guides 27 are preferably arranged on/fixed to the bottom of the box-like case 25 substantially parallel to the longitudinal axis of the box-like case 25, and preferably have a substantially C-shaped cross-section so as to couple in freely sliding manner to the guide rollers 24 present on the rails 23 of the battery compartment 21.

Clearly, when it is inserted in the battery compartment 21, the battery pack 20 rests on and is supported by the rectilinear rails 23 of the battery compartment 21.

With reference to Figure 4, preferably the battery compartment 21 is moreover provided with a preferably electrically- or pneumatically- operated, battery-locking device 28 which is adapted to selectively lock/immobilise the battery pack 20 inside the battery compartment 21.

In the example shown, in particular, the battery-locking device 28 includes an electro-controlled movable latch, is located next to one of the rails 23 of the battery compartment 21 locally substantially perpendicular to the longitudinal axis of the rail 23, and is selectively adapted to engage in pass-through manner the same rail 23 and the rectilinear guide 27 of the battery pack 20 fitted thereon, so as to prevent any sliding between the two components.

With reference to Figures 4, 5 and 6, the battery compartment 21 is finally provided with a floating electrical connection 29, which is adapted to connect the electrical circuit of the vehicle (not shown in the figures) to the battery pack 20 momentarily accommodated in the battery compartment 21, so that the battery pack 20 can power the engine assembly of the self-propelled vehicle 1, or rather the two electric engines 12.

The floating electrical connection 29 comprises: a coil spring 30 of given length, which has the rear end rigidly fixed to the chassis of the self-propelled vehicle 1, or rather to the chassis 10 of the rear tractor section 3, and extends cantilevered towards the access opening 22 of the battery compartment 21 while remaining locally substantially parallel to the insertion/extraction direction d₁ of the battery pack; and a male-female electrical connector 31 preferably of bipolar type, which is firmly fixed to the front end of the coil spring 30 so as to be aligned with the insertion/extraction direction d₁ of battery pack 20, and is stably connected to the electrical circuit of the self-propelled vehicle 1 preferably by means of a number of electric cables 32 extending inside the coil spring 30.

More specifically, the coil spring 30 is preferably arranged between the rectilinear rails 23 of the battery compartment 21, beside one of the rails 23.

Preferably, the floating electrical connection 29 additionally comprises also an oblong protruding beak 33 preferably having a plate-like structure, which is firmly fixed to the front end of the coil spring 30 so as to protrude cantilevered beyond the male-female electrical connector 31, while remaining substantially parallel to the insertion/ extraction direction d₁ of the battery pack.

In a different embodiment, however, the coil spring 30 could be replaced by a substantially rectilinear and elastically deformable rod preferably having a tubular structure, such as for example a straight tube segment made of elastomeric material.

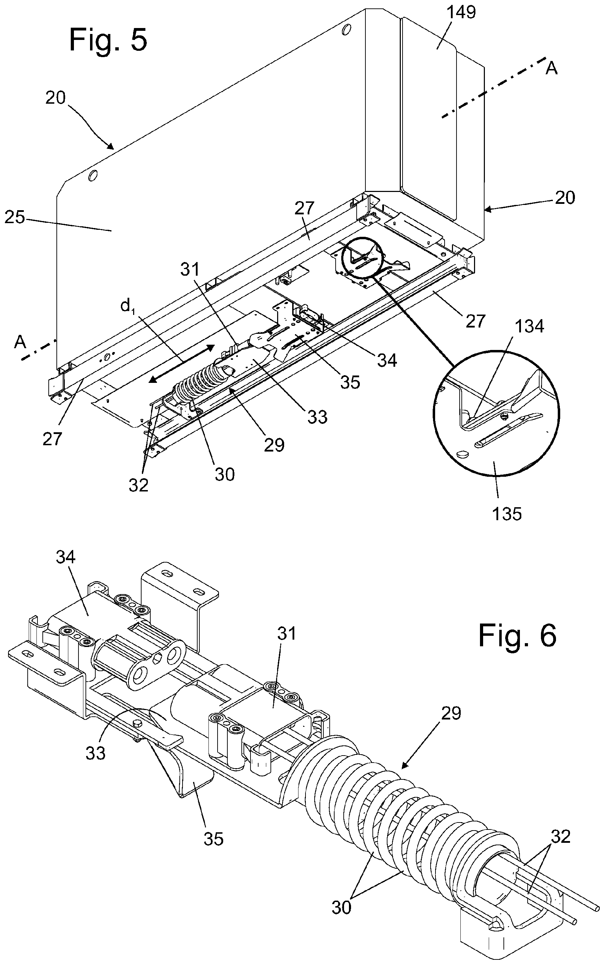

With reference to Figures 5 and 6, the/each chargeable battery pack 20, on the other hand, is provided with a second male-female electrical connector 34, complementary and selectively couplable in removable manner to the male-female electrical connector 31, which is electrically connected to the electrochemical batteries/cells 26, and is firmly fixed onto the bottom of box-like case 25, between the rectilinear guides 27, so as to be aligned with the main axis of the battery pack 20 (and thus with the insertion/extraction direction d₁ of the battery pack 20) and consequently be able to engage with/couple to the male-female electrical connector 31 of the battery compartment 21.

Clearly, when the electrical connectors 31 and 34 are coupled to one another, the electric energy stored in the electrochemical batteries/cells 26 of battery pack 20 can circulate in the electrical circuit of the vehicle and can power the engine assembly of the self-propelled vehicle 1, or rather the two electric engines 12.

Preferably, the/each chargeable battery pack 20 additionally also comprises a centring member 35 preferably shaped like a convergent chute, which is firmly fixed onto the bottom of box-like case 25, at the male-female electrical connector 34, and is structured so as to cooperate with the protruding beak 33 of the floating electrical connection 29, so as to align, during the insertion of the battery pack 20 in the battery compartment 21, the male-female electrical connector 31 of the battery compartment 21 with the male-female electrical connector 34 of the battery pack 20.

With reference to Figures 1, 2, 3 and 5, the charging station 100 in turn comprises: a battery-holding storage 101 which is capable of accommodating two or more battery packs 20 of the self-propelled vehicle 1; and a battery loading and unloading assembly 104 that, on command, is capable of extracting the battery pack 20 from the battery compartment 21 of the vehicle and placing it in the battery-holding storage 101, and then of extracting a second battery pack 20 from the battery-holding storage 101 and inserting it in the battery compartment 21 of the self-propelled vehicle 1.

More specifically, the battery-holding storage 101 is provided with a battery inlet and outlet opening 102 through which the battery loading and unloading assembly 104 can insert and extract a battery pack 20 from the battery-holding storage 101, and with a number of separate and adjacent battery housings 103 that are adapted to be engaged in axially sliding manner each by a single battery pack 20 of the self-propelled vehicle 1 in a direction d₂ substantially parallel to the main axis A of battery pack 20, and are selectively and alternately arrangeable in front of the battery inlet and outlet opening 102 so as to allow the insertion and/or the extraction of the battery pack 20.

In other words, each battery housing 103 of the battery-holding storage 101 is adapted to be engaged in axially sliding manner by the battery pack 20 of the vehicle, so as to be inserted in and extracted from each battery housing 103 moving the battery pack 20 straightway in an extraction/ insertion direction d₂ which is also substantially parallel to the main axis A of the battery pack 20 and preferably additionally substantially horizontal.

In the example shown, in particular, the battery-holding storage 101 is preferably provided with three battery housings 103 (only two illustrated).

Additionally, the battery-holding storage 101 is structured so that the battery inlet and outlet opening 102 thereof is substantially at the same height h from the ground of the battery compartment 21 of the self-propelled vehicle 1, or rather of the access opening 22 of the battery compartment 21.

The battery compartment 21 of self-propelled vehicle 1, or rather the access opening 22 of the battery compartment 21, can thus be aligned with the battery inlet and outlet opening 102, so that the extraction/insertion direction d₁ of battery pack 20 in the battery compartment 21 of the self-propelled vehicle 1 coincides with the extraction/insertion direction d₂ of battery pack 20 in the battery-holding storage 101. In this manner, the battery pack 20 can pass from the battery compartment 21 to the battery housing 103 and vice versa, following a straight movement in directions d₁ and d₂.

The battery loading and unloading assembly 104, in turn, is adapted to move, on command, the battery pack 20 which is momentarily aligned to the battery inlet and outlet opening 102 of battery-holding storage 101, straightaway forwards and backwards in direction d₂, so that the battery pack 20 can be inserted in or extracted from the battery housing 103 at the moment aligned with said battery inlet and outlet opening 102.

Additionally, the battery loading and unloading assembly 104 is adapted to selectively protrude cantilevered from the battery-holding storage 101, through the battery inlet and outlet opening 102, and to grasp and hold the battery pack 20 that is placed outside of the battery-holding storage 101, in front of the battery inlet and outlet opening 102.

When the battery compartment 21 of the self-propelled vehicle 1 is aligned with the battery inlet and outlet opening 102, the battery loading and unloading assembly 104 is thus capable of grasping and extracting the battery pack 20 from the battery compartment 21 so as to pull it into the battery housing 103 at the moment aligned with the battery inlet and outlet opening 102, and also of extracting the battery pack 20 from the battery housing 103 aligned with the battery inlet and outlet opening 102 and of pushing it inside the battery compartment 21 of the self-propelled vehicle 1.

With reference to Figures 1, 2 and 3, the charging station 100, in addition, is provided with an electric battery charging apparatus 105 that is adapted to charge the battery pack(s) 20 which are momentarily accommodated in the battery-holding storage 101; and with an electronic control device 106 which is adapted to command the battery-holding storage 101 and/or the battery loading and unloading assembly 104 and/or the battery charging apparatus 105.

More specifically, the battery charging apparatus 105 is preferably electrically connected to an external single-phase or three-phase electric mains, and preferably includes a static energy conversion module that is capable of converting the alternate-current electric energy coming from the external electric mains, into direct-current electric energy adapted to recharge the electrochemical batteries/ cells 26 of any battery pack 20.

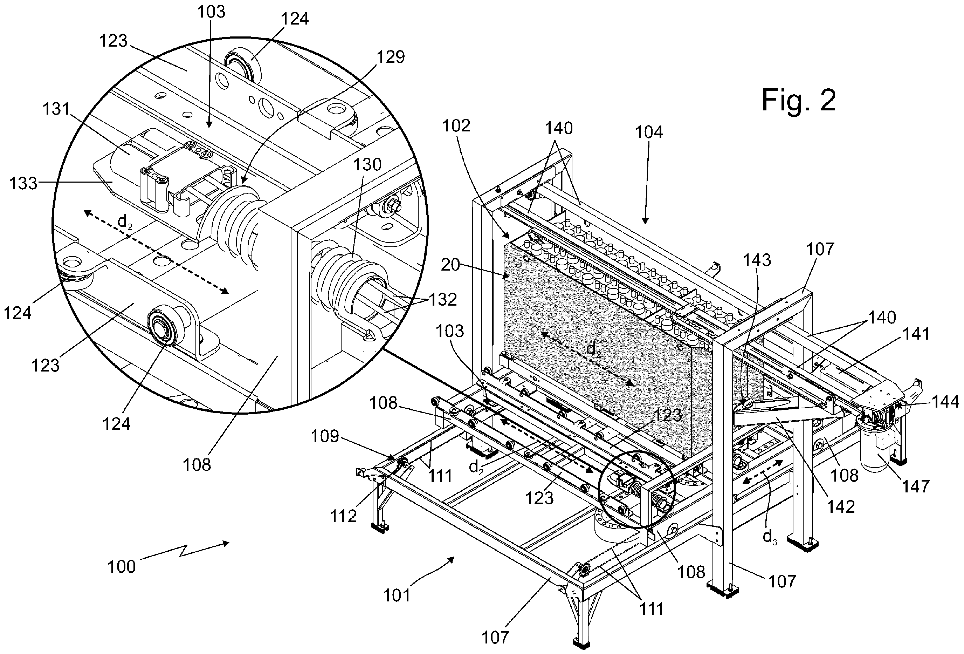

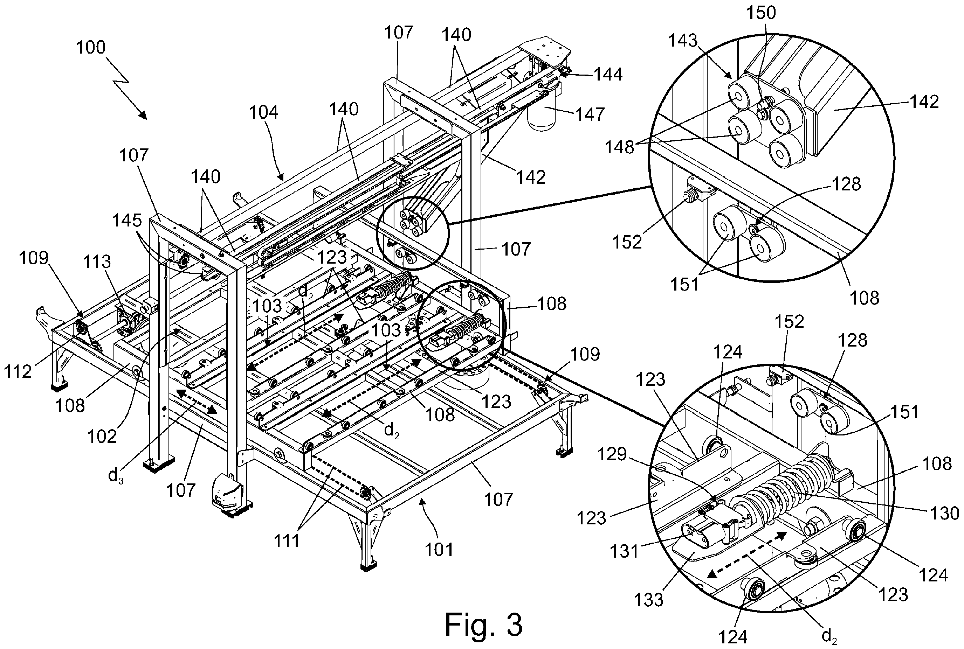

With reference to Figures 2 and 3, in the example shown, in particular, the battery-holding storage 101 preferably comprises: a rigid framework 107 with self-supporting structure, which is adapted to firmly rest on and optionally be anchored to the ground, and is preferably formed by a series of metallic rectilinear section-bars butt fixed to one another; a preferably substantially rectangular-shaped, movable platform 108 which is fixed to or anyway placed onto the rigid framework 107 in a substantially horizontal position, with the capability of freely sliding/moving forwards and backwards on the same rigid framework 107 in a substantially horizontal direction d₃, preferably while remaining always parallel to itself; and a preferably electric- or pneumatic- type, driving device 109 which is capable of moving, on command, the movable platform 108 forwards and backwards on the rigid framework 107.

The battery housings 103 are preferably arranged one beside the other on top of the movable platform 108, aligned in the moving direction d₃ of the movable platform 108 on rigid framework 107, and are oriented transversally to the movement direction d₃ of the movable platform 108 on the rigid framework 107.

The battery inlet and outlet opening 102 of battery-holding storage 101 is moreover located beside the movable platform 108, in a specific point of its movement travel/path on the rigid framework 107, and the driving device 109 is preferably adapted to move, on command, the movable platform 108 forwards and backwards on the rigid framework 107, in the direction d₃, so as to be able to align, on command, any one of the battery housings 103 with the battery inlet and outlet opening 102.

More in detail, in the example shown the movable platform 108 is preferably movable horizontally on a lying plane that is located substantially at the same height from the ground of the access opening 22 of the battery compartment 21 of the self-propelled vehicle 1.

In other words, the set of battery housings 103 of the battery-holding storage 101 is capable of moving straightaway in a preferably substantially horizontal, direction d₃.

Additionally, in the example shown, each battery housing 103 of battery-holding storage 101 is preferably oriented so that its extraction/insertion direction d₂ of battery pack 20 is locally substantially perpendicular to the movement direction d₃ of the movable platform 108 on rigid framework 107.

With reference to Figures 2 and 3, in the example shown, in particular, the driving device 109 preferably comprises: two twinned drive chains 111 that are each looped around a respective pair of gear wheels 112 fixed in axially rotatable manner to the rigid framework 107, substantially at the two ends of the travel/path of the movable platform 108; and an electric engine 113 that is preferably firmly fixed to the rigid framework 107, underneath the moving plane of the movable platform 108, and is mechanically connected to one of the two gear wheels 112 of each drive chain 111, so as to move the two drive chains 111 forwards and backwards in synchronised manner.

The upper and lower branches of the two drive chains 111 are thus parallel to the movement direction d₃ of movable platform 108 on rigid framework 107, and the movable platform 108 is preferably fixed in rigid manner to a point of the upper branch of both drive chains 111, so as to follow the movements of the drive chains 111.

The electronic control device 106 is adapted to command the electric engine 113.

With reference to Figures 2 and 3, analogously to the battery compartment 21 of self-propelled vehicle 1, each battery housing 103 of the battery-holding storage 101 comprises: at least a pair of rectilinear rails 123 that extend parallel to the extraction/insertion direction d₂ of the battery pack 20, and are fixed in a rigid manner to the frame of the battery-holding storage 101, or rather to the movable platform 108, spaced one beside the other, preferably so as to lie on a same, substantially horizontal, reference plane; and preferably a series of small guide rollers 124 that are spaced along the entire length of rails 123, and are fixed in freely rotatable manner to the same rails 23.

The arrangement and the dimensions of the rectilinear rails 123 are moreover substantially the same as those of the rectilinear rails 23 present in the battery compartment 21 of self-propelled vehicle 1, so that the rectilinear guides 27 of the/of each battery pack 20 can slidingly couple also to the rails 123 of any battery housing 103 of the battery-holding storage 101.

Additionally, the height from the ground of the rectilinear rails 123 is substantially the same as the height from the ground of the rectilinear rails 23 of the battery compartment 21 of the self-propelled vehicle 1.

Consequently, when the battery compartment 21 of the self-propelled vehicle 1 is aligned to the battery housing 103 of the battery-holding storage 101, the rectilinear rails 23 of battery compartment 21 align to the rectilinear rails 123 of the battery housing 103.

With reference to Figures 2, 3, and 5, analogously to the battery compartment 21, each battery housing 103 of the battery-holding storage 101 is moreover provided with a respective floating electrical connection 129 which is adapted to connect the battery charging apparatus 105 to the battery pack 120 momentarily accommodated in the battery housing 103, so that the electric current produced by the battery charging apparatus 105 can circulate in the battery pack 20 and charge the electrochemical batteries/cells 26.

Additionally, each battery housing 103 of the battery-holding storage 101 is preferably additionally provided with a preferably electrically- or pneumatically- operated, battery-locking device 128 that is adapted to selectively lock/immobilise the battery pack 20 within the same battery housing 103.

With reference to Figures 2 and 3, preferably the floating electrical connection 129 of each battery housing 103 is furthermore structurally substantially identical to the floating electrical connection 29 of the battery compartment 21.

In other words, the floating electrical connection 129 comprises: a coil spring 130 of given length, which has the rear end rigidly fixed to the frame of the battery-holding storage 101, or rather to the movable platform 108, and extends cantilevered towards the access opening of the battery housing 103 while remaining locally substantially parallel to the insertion/extraction direction d₂ of the battery pack; and a male-female electrical connector 131 preferably of bipolar type, which is firmly fixed to the front end of the coil spring 130 so as to be aligned with the insertion/extraction direction d₂ of battery pack 20, and is stably connected to the battery charging apparatus 105 preferably by means of a plurality of electric cables 132 that extend inside the coil spring 130.

More in detail, the coil spring 130 is preferably arranged between the rectilinear rails 123 of the battery housing 103, beside one of the rails 123.

Preferably, the floating electrical connection 129 additionally also comprises an oblong protruding beak 133 preferably having a plate-like structure, which is firmly fixed to the front end of the coil spring 130 so as to protrude cantilevered beyond the male-female electrical connector 131 while remaining substantially parallel to the insertion/extraction direction d₂ of the battery pack 20.

Also in this case, the coil spring 130 could be replaced by a substantially rectilinear and elastically deformable rod preferably having a tubular structure, such as for example a straight tube segment made of elastomeric material.

With reference to Figure 5, in turn, the/each chargeable battery pack 120 is provided with a further male-female electrical connector 134, complementary and selectively couplable in removable manner to the male-female electrical connector 131, which is electrically connected to the electrochemical batteries/cells 126, and is firmly fixed to the bottom of the box-like case 125, between the rectilinear guides 127, so as to be aligned with the main axis A of battery pack 20 (and thus with the insertion/extraction direction d₂ of the battery pack 20) and consequently be able to engage with/couple to the male-female electrical connector 131 of the battery housing 103 of the battery-holding storage 101.

Clearly, when the electrical connectors 131 and 134 are coupled to one another, the electric current coming from the battery charging apparatus 105 can circulate in the battery pack 20 and recharge the electrochemical batteries/cells 26 of the battery pack 20.

Preferably, the/each chargeable battery pack 120 moreover also comprises a second centring member 135 preferably shaped like a convergent chute, which is firmly fixed to the bottom of the box-like case 125, at the male-female electrical connector 134, and is structured so as to cooperate with the protruding beak 133 of the floating electrical connection 129 of any battery housing 103 of the battery-holding storage 101, so as to align, during the insertion of the battery pack 20 in the battery housing 103, the male-female electrical connector 131 of battery housing 103 with the male-female electrical connector 134 of battery pack 20.

With reference to Figures 1, 2 and 3, the battery loading and unloading assembly 104, in turn, is preferably provided with a movable push-pull member which is capable of holding a battery pack 20, and is movable in direction d₂ along a substantially rectilinear path that crosses the battery housing 103 aligned to the battery inlet and outlet opening 102 of battery-holding storage 101, passes through the battery inlet and outlet opening 102 of battery-holding storage 101, and ends outside of the battery-holding storage 101.

More specifically, the battery loading and unloading assembly 104 preferably comprises: a rectilinear beam 140 preferably made of metallic material, which is rigidly connected to the rigid framework 107 of the battery-holding storage 101, extends parallel to the extraction/insertion direction d₂ of battery packs 20 spaced above the movable platform 108, and is vertically aligned with the battery inlet and outlet opening 102 of the battery-holding storage 101; a movable slide 141 that is attached beneath the rectilinear beam 140 with the capability of freely sliding along the rectilinear beam 140 parallel to the longitudinal axis of the beam, i.e. in direction d₂; and a rigid and oblong push-pull arm 142 that protrudes cantilevered from the movable slide 141, and extends downwards, or rather towards the underlying movable platform 108, obliquely to direction d₂, preferably while remaining substantially coplanar to the rectilinear beam 140. The push-pull arm 142 is rigidly fixed to the movable slide 141 and is provided, on its distal end, with a preferably electrically- or pneumatically- operated, gripping head 143 capable of grasping and holding any battery pack 20.

The battery inlet and outlet opening 102 of the battery-holding storage 101 is preferably delimited by a vertical upright with gantry structure, which supports the front end of the rectilinear beam 140.

In addition, the battery loading and unloading assembly 104 also comprises a driving device 144 preferably of electric or pneumatic type, which is capable of moving, on command, the movable slide 141 forwards and backwards along the rectilinear beam 140.

More in detail, the driving device 144 is capable of moving, on command, the movable slide 141 forwards and backwards along the rectilinear beam 140, between a first operating position in which the slide 141 is located close to the front end of the beam 101, and the arm 142 protrudes from the battery-holding storage 101 through the battery inlet and outlet opening 102; and a second operating position (see Figures 2 and 3) in which the slide 141 is located close to the rear end of the beam 101, and the arm 142 is arranged behind the battery housing 103 at the moment aligned with the battery inlet and outlet opening 102 of battery-holding storage 101.

With reference to Figures 2 and 3, in particular the driving device 144 preferably comprises: two pairs of gear wheels 145 that are fixed in axially rotatable manner to the body of the rectilinear beam 140, preferably substantially at the two ends of the beam; two drive chains (not shown in the figures) that are looped around each to a respective pair of gear wheels 145; and an electric engine 147 which is preferably fixed cantilevered to one of the two ends of rectilinear beam 140, and is mechanically connected to one of the two gear wheels of each pair of gear wheels 145, so as to be able to move the two drive chains forwards and backwards in a synchronised manner.

The upper and lower branches of the two drive chains 111 are thus parallel to the longitudinal axis of rectilinear beam 140, and thus also to the insertion/extraction direction d₂ of battery packs 20, and the movable slide 141 is preferably rigidly fixed at a point of the lower branch of both drive chains of driving device 144, so as to follow the movements of the same chains.

The electronic control device 106 is adapted to command the electric engine 147.

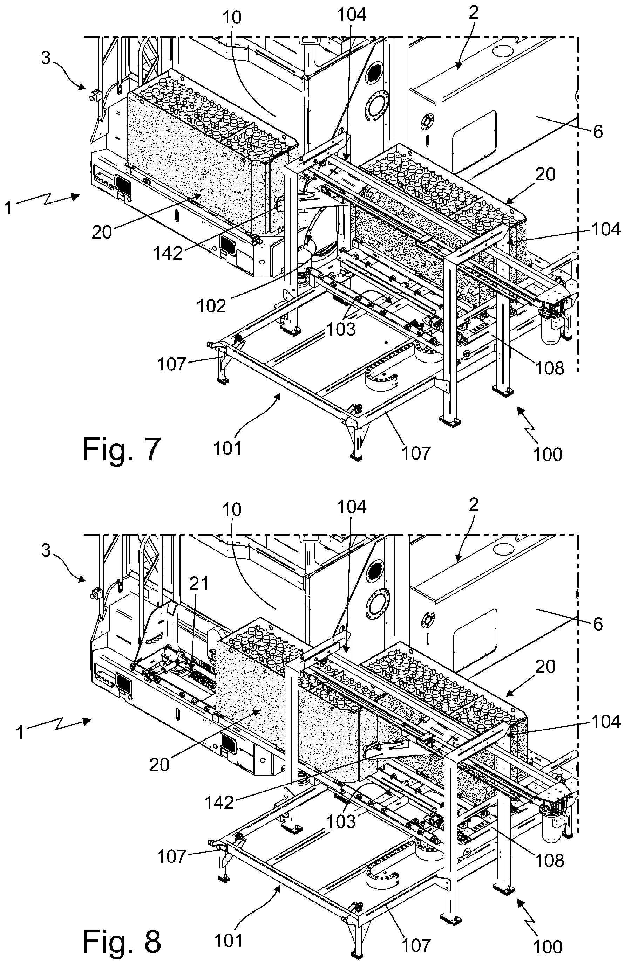

With reference to Figure 7, the gripping head 143 of arm 142, on the other hand, is preferably provided with a series of electromagnets 148 that are capable of firmly attaching, when the electric current circulates therein, to a metal plate 149 firmly fixed to the side wall of the external case 25 of the/of each rechargeable battery pack 20, and preferably also with a presence sensor 150 that is capable of detecting when the gripping head 143 is resting on the metal plate of the battery pack 20.

The electronic control device 106 is adapted to command/ power the electromagnets 148 on the basis of the signals coming from the presence sensor 150.

With particular reference to Figure 3, similarly to the gripping head 143, the battery-locking device 128 of each battery housing 103 preferably comprises: one or more electromagnets 151 that are rigidly fixed to the frame of the battery-holding storage 101, or rather to the movable platform 108, and are capable of firmly attaching to the metal plate 149 of the battery pack 20 when electric current circulates therein; and preferably also a presence sensor 125 that is capable of detecting when the metal plate 149 of the battery pack 20 rests on the electromagnet(s) 151.

The electronic control device 106 is adapted to command/ power the electromagnets 151 on the basis of the signals coming from the presence sensors 152.

General operation of the self-propelled vehicle 1 and of the charging station 100 are easily inferable from what described above.

With reference to Figure 1, the driver of the vehicle places the self-propelled vehicle 1 beside to the charging station 100, aligning the battery compartment 21 to the battery inlet and outlet opening 102 of the battery-holding storage 101, so as to align the rectilinear rails 23 of the battery compartment 21 with the rectilinear rails 123 of the battery housing 103 that is aligned to the battery inlet and outlet opening 102 of the battery-holding storage 101.

With reference to Figures 1 and 7, if the battery housing 103 that is arranged at the battery inlet and outlet opening 102 already hosts a battery pack, the electronic control device 106 controls the driving device 109 so as to move the movable platform 108 in direction d₃ and bring the empty battery housing 103 at the battery loading and unloading assembly 104.

With reference to Figure 7, after arranging the battery-holding storage 101 so that it can receive the discharged battery pack 20, the electronic control device 106 controls the driving device 144 so as to move the movable slide 141 along the rectilinear beam 140 towards the self-propelled vehicle 1, up to place the movable slide 141 in the first operating position, so as to bring the gripping head 143 of arm 142 outside of the battery-holding storage 101, in abutment on the discharged battery pack 20 housed in the battery compartment 21 of the self-propelled vehicle 1.

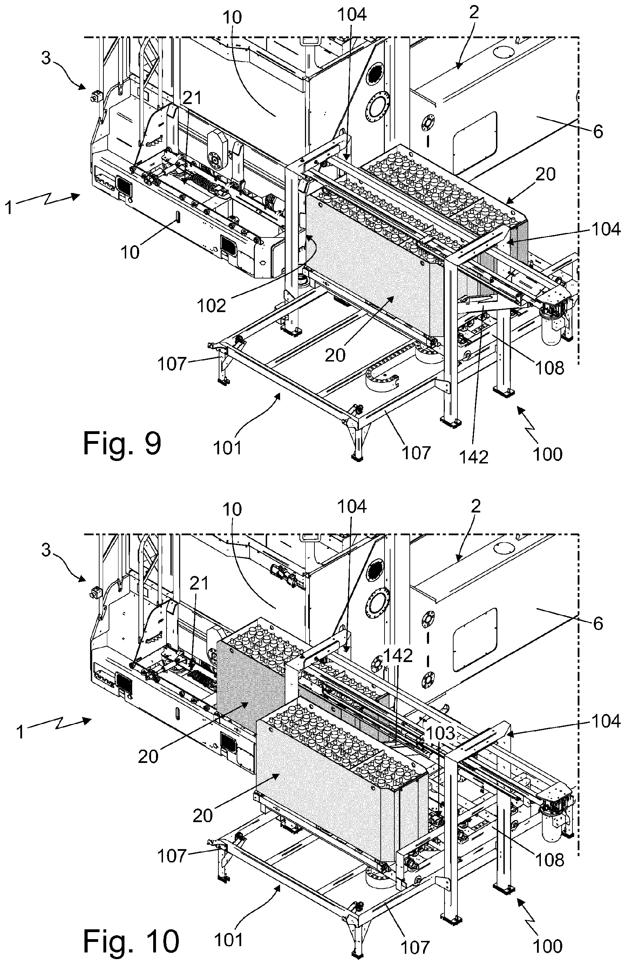

With reference to Figures 8 and 9, after bringing the gripping head 143 of arm 142 in abutment on the discharged battery pack 20, the electronic control device 106 activates the gripping head 143, or rather the electromagnets 148, so as to grasp and hold the discharged battery pack 20 present in the battery compartment 21 of self-propelled vehicle 1, and then controls the driving device 144 so as to bring the movable slide 141 back into the second operating position, so as to extract the discharged battery pack 20 from the battery compartment 21 of the self-propelled vehicle 1 and transfer it into the battery housing 103 of the battery-holding storage 101.

During the extraction of the discharged battery pack 20 from battery compartment 21, the male-female electrical connector 34 of the discharged battery pack 20 detaches from the male-female electrical connector 31 of battery compartment 21, disconnecting the discharged battery pack 20 from the electrical circuit of the self-propelled vehicle 1.

Instead, during the subsequent insertion of the discharged battery pack 20 within the battery housing 103 of battery-holding storage 101, the male-female electrical connector 134 of the discharged battery pack 20 engages with the male-female electrical connector 131 of battery housing 103, connecting the discharged battery pack 20 to the battery charging apparatus 105 that is thus capable of starting the charging of the discharged battery pack 20.

When it detects that the discharged battery pack 20 has moved into the battery housing 103 of the battery-holding storage 101, the electronic control device 106 deactivates the gripping head 143, or rather the electromagnets 148, so as to detach/free the discharged battery pack 20 from the battery loading and unloading assembly 104, and then activates the battery-locking device 128 of the battery housing 103, or rather the electromagnets 151, so as to lock/immobilise the discharged battery pack 20 within the same battery housing 103.

With reference to Figures 9 and 10, after having moved the discharged battery pack 20 into the battery housing 103 of the battery-holding storage 101, the electronic control device 106 controls the driving device 109 so as to move the movable platform 108 in direction d₃ and align the other/ second battery housing 103 (i.e. the battery housing 103 hosting the charged battery pack 20) to the battery inlet and outlet opening 102 of the battery-holding storage 101.

With reference to Figure 10, after having moved the battery housing 103 hosting the charged battery pack 20 at the battery inlet and outlet opening 102 of the battery-holding storage 101, the electronic control device 106 controls the driving device 144 of the battery loading and unloading assembly 104 so as to move the movable slide 141 along the rectilinear beam 140 towards the self-propelled vehicle 1, up to place again the movable slide 141 in the first operating position, so as to bring the gripping head 143 of arm 142 in abutment on the charged battery pack 20 present in the battery housing 103 and then push the charged battery pack 20 inside the battery compartment 21 of the self-propelled vehicle 1.

After having pushed the charged battery pack 20 inside the battery compartment 21 of the self-propelled vehicle 1, the electronic control device 106 controls the driving device 144 so as to bring the movable slide 141 back into the second operating position, ending the battery replacement procedure.

The advantages associated with the hot swap of the battery pack 20 of the self-propelled vehicle 1 are remarkable.

First of all, the hot swap of the battery pack 20 is considerably quicker than the time necessary to completely recharge the battery pack 20, with all the operating advantages that this entails.

Furthermore, the hot swap of the battery pack 20 occurs by moving the two battery packs 20 horizontally, i.e. without variations of height from the ground, minimising the problems resulting from the high weight of the two battery packs 20 involved in the operation.

Additionally, the electrical connection between the battery pack 20 and the electrical circuit of the vehicle on the one hand, and the battery charging apparatus 105 on the other hand, occur by means of male-female electrical connectors, with the performance and intrinsic safety advantages that this entails.

The male-female electrical connectors 31, 34, 131 and 134, in fact, allow the safety passage of an electric current having a much greater value than that allowed by normal sliding contacts, and moreover they operate correctly also in particularly humid and dusty environments.

Consequently, the charging station 100 can be placed, without particular measures, also inside very dusty and/or high humidity environments. Environments where the self-propelled vehicles 1 for handling glass-sheet supporting racks traditionally operate.

In addition, the placing of the electrical connectors 31 and 131 at the distal end of the coil springs 30 and 130, allows, during the swap of the battery packs 20 between the self-propelled vehicle 1 and the charging station 100, a quick centring and coupling to the corresponding electrical connectors 34 and 134 present on each battery pack 20.

Finally, the arrangement of connection cables 32 and 132 inside the coil springs 30 and 130 eliminates the risk that the electric cables are accidentally sheared during the swap of the battery packs 20.

It is finally clear that modifications and variants can be made to the self-propelled vehicle 1 and to the charging station 100 described above without however departing from the scope of the present invention.

For example, in a different embodiment, the battery compartment 21 of self-propelled vehicle 1 could be placed on the front rack-supporting section 2, preferably, though not necessarily, at the rear part of the oblong chassis 6.

In a less sophisticated embodiment of self-propelled vehicle 1, additionally, the engine assembly could comprise a single high-power electric engine mechanically connected to both ground-resting wheels 5.

Additionally, in a less sophisticated embodiment, the/ each battery pack 20 could be provided with a single rectilinear guide 27 parallel to the main axis A of battery pack 20, and thus to the insertion/extraction directions d₁ and d₂ of the battery pack.

In this embodiment, the battery compartment 21 of the self-propelled vehicle 1 would be provided with a single rectilinear rail 23 parallel to the insertion/extraction direction d₁ of the battery pack 20 in the battery compartment 21.

Additionally, the coil spring 30 of the floating electrical connection 29 would preferably be placed beside the single rectilinear rail 23 of the battery compartment 21, and would extend cantilevered towards the access opening 22 of the battery compartment 21 while always remaining substantially parallel to the direction d₁.

Parallelly, each battery housing 103 of battery-holding storage 101 would be provided with a single rectilinear rail 123 parallel to the insertion/extraction direction d₂ of the battery pack 20 in the battery housing 103.

Even in this case, the coil spring 130 of the floating electrical connection 129 of each battery housing 103 would preferably be arranged beside of the single rectilinear rail 123 of the battery housing 103, and would extend cantilevered towards the battery inlet and outlet opening 102 of the battery-holding storage 101, while always remaining substantially parallel to the direction d₂.

Finally, the coil spring 30 could be replaced by an elastically-deformable rod preferably having a tubular structure, such as for example a straight tube segment made of elastomeric material.

Similarly, the coil spring 130 could be replaced by an elastically-deformable rod preferably having a tubular structure, such as for example a straight tube segment made of elastomeric material.

## Claims

1. A self-propelled electric vehicle (1) for handling glass-sheet supporting racks of the type comprising a front rack-supporting section (2) and a rear tractor section (3), both provided with ground-resting wheels and firmly connected to one another by mechanical means allowing the rack-supporting section (2) to move vertically with respect to the tractor section (3);
the front rack-supporting section (2) being provided with an oblong substantially U-shaped chassis (6), which is provided with two longitudinal beams (7) extending horizontal and parallel to the vehicle longitudinal axis (L) to delimit a large central compartment (8) open at the front and dimensioned to accommodate a glass-sheet supporting rack, and with at least a first pair of ground-resting wheels (4) located along the longitudinal beams (7);
the rear tractor section (3) being provided with at least a second pair of ground-resting wheels (5), and with an electric engine assembly (12) adapted to drive into rotation at least one of the ground-resting wheels (5) of the same tractor section (3);
the self-propelled vehicle (1) being additionally provided with a battery pack (20) adapted to power said electric engine assembly (12), and being **characterised in that** said battery pack (20) is removable and is fitted in axially sliding manner into a corresponding battery compartment (21) of the vehicle, so as to be fitted in and extracted from said battery compartment (21) by a straight movement in a first direction (d₁) substantially parallel to a main axis (A) of said battery pack (20).

2. Self-propelled vehicle according to Claim 1, wherein the battery compartment (21) is provided with one or more rectilinear rails (23) that extend parallel to said first direction (d₁), and are adapted to be coupled in sliding manner with corresponding rectilinear guides (27) located on the battery pack (20).

3. Self-propelled vehicle according to any one of the preceding claims, wherein the battery compartment (21) additionally comprises a floating electrical connection (29) which is adapted to connect the electrical circuit of the vehicle to the battery pack (20) and comprises: an elastically deformable rod (30) having the rear end fixed to the chassis (6, 10) of the self-propelled vehicle (1), and extending cantilevered towards the access opening (22) of the battery compartment (21) while remaining locally substantially parallel to said first direction (d₁); and a first male-female electrical connector (31) that is firmly fixed on the front end of said elastically deformable rod (30) and is adapted to engage in removable manner with a second male-female electrical connector (34), which is placed on said battery pack (20) and is complementary to said first male-female electrical connector (31).

4. Self-propelled vehicle according to Claim 3, wherein said elastically deformable rod (30) is located beside the/a rectilinear rail (23) of the battery compartment (21).

5. Self-propelled vehicle according to Claim 3 or 4, wherein said elastically deformable rod (30) is a coil spring.

6. Self-propelled vehicle according to Claim 5, wherein said first male-female electrical connector (31) is connected to the electrical circuit of the self-propelled vehicle (1) by means of a plurality of electric cables (32) extending inside said coil spring (30).

7. Self-propelled vehicle according to Claim 3, 4, 5 or 6, wherein said floating electrical connection (29) additionally comprises a protruding beak (33) that is firmly fixed on the front end of said elastically deformable rod (30) so as to protrude cantilevered beyond said first male-female electrical connector (31), while remaining substantially parallel to said first direction (d₁), and is adapted to cooperate with a centring member (35) placed on the battery pack (20) in order to align said first male-female electrical connector (31) with said second male-female electrical connector (34).

8. A charging station (100) for self-propelled vehicles for handling glass-sheet supporting racks, which vehicles are provided with a battery pack (20) housed in axially sliding manner into a battery compartment (21) of the vehicle, so as to be inserted in and extracted from said battery compartment (21) via a straight movement in a first direction (d₁) substantially parallel to the main axis (A) of the battery pack (20);
the charging station (100) being **characterised by** comprising: a battery-holding storage (101) provided with a number of battery housings (103) that are adapted to be engaged in axially sliding manner each by a single battery pack (20) in a second direction (d₂) substantially parallel to the main axis (A) of the battery pack (20), and can be selectively and alternately arranged in front of a battery inlet and outlet opening (102) through which it is possible to insert and extract a battery pack (20) from the battery housing (103); and a battery loading and unloading assembly (104) which is adapted to move, forwards and backwards along said second direction (d₂), the battery pack (20) that is momentarily aligned with the battery inlet and outlet opening (102) of the battery-holding storage (101), so as to insert or extract the battery pack (20) from the battery housing (103) that is at the moment aligned with said battery inlet and outlet opening (102).

9. Charging station according to Claim 8, wherein said battery loading and unloading assembly (104) is adapted to selectively protrude cantilevered from the battery-holding storage (101) through the battery inlet and outlet opening (102) and to grasp and hold the battery pack (20) that is placed outside of the battery-holding storage (101), in front of the battery inlet and outlet opening (102).

10. Charging station according to Claim 9, wherein said battery loading and unloading assembly (104) comprises a mobile push-pull member (142, 143) which is adapted to hold a battery pack (20), and is movable in said second direction (d₂) along a substantially rectilinear path that crosses the battery housing (103) aligned with the battery inlet and outlet opening (102) of the battery-holding storage (101), passes through the battery inlet and outlet opening (102) of the battery-holding storage (101), and ends outside of the battery-holding storage (101).

11. Charging station according to Claim 8, 9 or 10, wherein each battery housing (103) of the battery-holding storage (101) is provided with one or more rectilinear rails (123) that extend parallel to said second direction (d₂), and are adapted to couple in sliding manner with corresponding rectilinear guides (27) located on the battery pack (20).

12. Charging station according to any one of Claims from 8 to 12, wherein each battery housing (103) of the battery-holding storage (101) additionally comprises a floating electrical connection (129) which is adapted to connect the battery pack (20) to a battery charging apparatus (105), and which comprises: an elastically deformable rod (130) having the rear end fixed to the frame (108) of the battery-holding storage (101) and extending cantilevered towards the battery inlet and outlet opening (102) of the battery-holding storage (101) while remaining locally substantially parallel to said second direction (d₂); and a first male-female electrical connector (131) which is firmly fixed to the front end of said elastically deformable rod (130) and is adapted to engage in removable manner with a second male-female electrical connector (134), which is located on said battery pack (20) and is complementary to said first male-female electrical connector (131).

13. Charging station according to Claim 12, wherein said elastically deformable rod (130) is arranged beside the/a rectilinear rail (123) of the battery housing (103).

14. Charging station according to Claim 12 or 13, wherein said elastically deformable rod (130) is a coil spring.

15. Charging station according to Claim 14, wherein said first male-female electrical connector (131) is connected to said battery charging apparatus (105) by means of a plurality of electric cables extending inside said coil spring (130).

16. Charging station according to Claim 12, 13, 14 or 15, wherein said floating electrical connection (129) additionally comprises a protruding beak (133) that is firmly fixed on the front end of said elastically deformable rod (130) so as to protrude cantilevered beyond said first male-female electrical connector (131), while remaining substantially parallel to said second direction (d₂), and is adapted to cooperate with a centring member (135) located on the battery pack (20) in order to align said first male-female electrical connector (131) with said second male-female electrical connector (134).
